# EUROPEAN PATENT SPECIFICATION

(11) **EP 2 388 097 B1**
(45) Date of publication and mention of the grant of the patent: **09.11.2016**
(21) Application number: 11166567.5
(22) Date of filing: 18.05.2011
(51) Int. Cl.: B23D 59/00, B23Q 11/00

(54) **Bench cutting tool with dust collecting device**
Werktischsschneidwerkzeug mit Staubsammelvorrichtung
Outil de coupe d'établi avec dispositif de collecte de poussière

(30) Priority: 20.05.2010 JP 2010116151
(43) Date of publication of application: 23.11.2011
(73) Proprietor: Makita Corporation, Anjo Aichi 446-8502 (JP)
(72) Inventor: Aoyama, Syuji, Anjo, Aichi 446-8502 (JP)
(74) Representative: Kramer Barske Schmidtchen Patentanwälte PartG mbB

(56) References cited:
- EP-A1- 1 990 121
- EP-A2- 2 163 363
- DE-U1- 20 001 856
- JP-A- 2006 088 539
- JP-A- 2008 036 723
- JP-A- 2008 279 609
- JP-A- 2009 143 129
- US-A- 2 553 924
- US-A1- 2003 220 060
- US-A1- 2004 248 507
- US-B2- 7 325 273

## Description

The present invention relates to a bench cutting tool according to the preamble of claim 1.

Such a bench cutting tool is known from JP2009143129A.

US 7,325,273 B2 discloses a suction device for a hand-held power tool and which is releasably connected with the power tool. JP 2008-36723 A discloses an interlocking system of a dust collector.

A dust-collecting device that is attached to a bench cutting tool (e.g., a bench circular saw or miter saw) is taught by, for example, Japanese Laid-Open Patent Publications Nos. 2006-88539 and 2008-279609. The dust-collecting device is mainly composed of a dust-collecting container (a dust bag or a dust box) attached to a rear side of a stationary cover that covers an upper portion of a circular saw blade. The dust-collecting device is constructed such that cutting chips blown up from a cutting site of the cutting tool by rotation of the circular saw blade can be directly blown into and collected in the dust-collecting container using an air stream generated by rotation of the circular saw blade.

Thus, the dust-collecting device can collect the cutting chips produced from the cutting site of the cutting tool. Therefore, the cutting chips can be prevented from being accumulated in or around the cutting site of the cutting tool. As a result, a cutting operation of the cutting tool can be performed accurately and quickly. In addition, good working conditions can be provided for performing the cutting operation of the cutting tool.

However, the prior art dust-collecting device is constructed such that the cutting chips can be corrected using the air stream generated by the rotating circular saw blade. Therefore, the dust-collecting device cannot have sufficient dust-collecting performance (dust-collecting efficiency) in some situations.

It is, accordingly, one object of the present invention to provide an improved dust-collecting device having increased dust-collecting performance.

This object is solved by a bench cutting tool according to claim 1.

A bench cutting tool includes a dust-collecting container connected to a dust-collecting port of a stationary cover that covers an upper portion of the rotary cutter blade. The dust-collecting container includes a self dust-collecting mechanism that is capable of forcibly collecting cutting chips into the dust-collecting container.

According to this aspect, the dust-collecting container connected to the dust-collecting port includes the self dust-collecting mechanism (an independent mechanism that is capable of generating a dust-collecting air stream). Therefore, cutting chips produced in a cutting site can be collected into the dust-collecting container by an air stream generated by rotation of the rotary cutter blade. Also, the cutting chips can be forcibly collected into the dust-collecting container by a powerful air stream generated by the self dust-collecting mechanism. Therefore, the dust-collecting device can have dust-collecting performance greater than the conventional device.

Optionally, the self dust-collecting mechanism is capable of being switched between a condition in which the self dust-collecting mechanism is actuated in synchrony with the operation of the cutting tool and a condition in which the self dust-collecting mechanism is not actuated in synchrony with the operation of the cutting tool.

Other objects, features and advantages of the present invention will be readily understood after reading the following detailed description together with the accompanying drawings and the claims.

FIG. 1 is a side view of a cutting tool having a dust-collecting device according to a first embodiment, which is viewed from a left side of a user;
FIG. 2 is a plan view of the cutting tool having the dust-collecting device;
FIG. 3 is a side view of the cutting tool having the dust-collecting device, which is viewed from a right side of the user;
FIG. 4 is a right side view of the dust-collecting device (a dust box);
FIG. 5 is a left side view of the dust-collecting device (the dust box), which shows an interior structure thereof;
FIG. 6 is a plan view of the dust-collecting device (the dust box);
FIG. 7 is a power circuit diagram of the dust-collecting device;
FIG. 8 is a plan view of a cutting tool having a dust-collecting device according to a second embodiment;
FIG. 9 is a side view of the dust-collecting device that is removed from the cutting tool;
FIG. 10 is a power circuit diagram of the dust-collecting device;
FIG. 11 is a plan view of a cutting tool having a dust-collecting device according to a third embodiment;
FIG. 12 is a side view of the dust-collecting device that is removed from the cutting tool; and
FIG. 13 is a power circuit diagram of the dust-collecting device.

Next, the representative embodiments of the present invention will be described with reference to the drawings.

### First Detailed Representative Embodiment

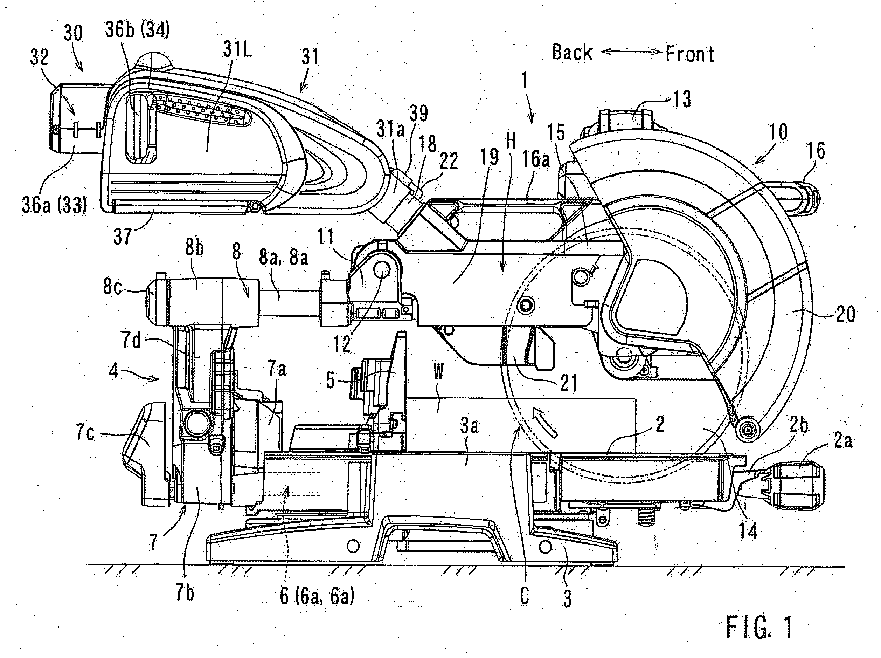

A first detailed representative embodiment of the present invention will be described with reference to FIGS. 1 to 7.

In this embodiment, a bench miter saw (circular saw) is exemplified as a cutting tool (a cutting machine) 1. The cutting tool 1 has a dust-collecting device 30 that is capable of collecting cutting chips (powder) produced by a cutting operation of the cutting tool 1. Further, the cutting tool 1 has the substantially same structure as a known structure except for the dust-collecting device 30.

First, a structure of the cutting tool 1 except for the dust-collecting device 30 will be described. As shown in FIG. 1, the cutting tool 1 basically includes an approximately-circular table 2 on which a material W to be cut (which material will be hereinafter referred to as a workpiece W) is positioned, a base 3 that rotatably supports the table 2, a main body supporting portion 4 that is disposed on a rear portion of the table 2, a cutting machine main body 10 that is positioned above the table 2 while it is supported by the main body supporting portion 4. As will be appreciated, a user is positioned on a right side of the cutting tool 1 in FIG. 1 in order to use the cutting tool 1.

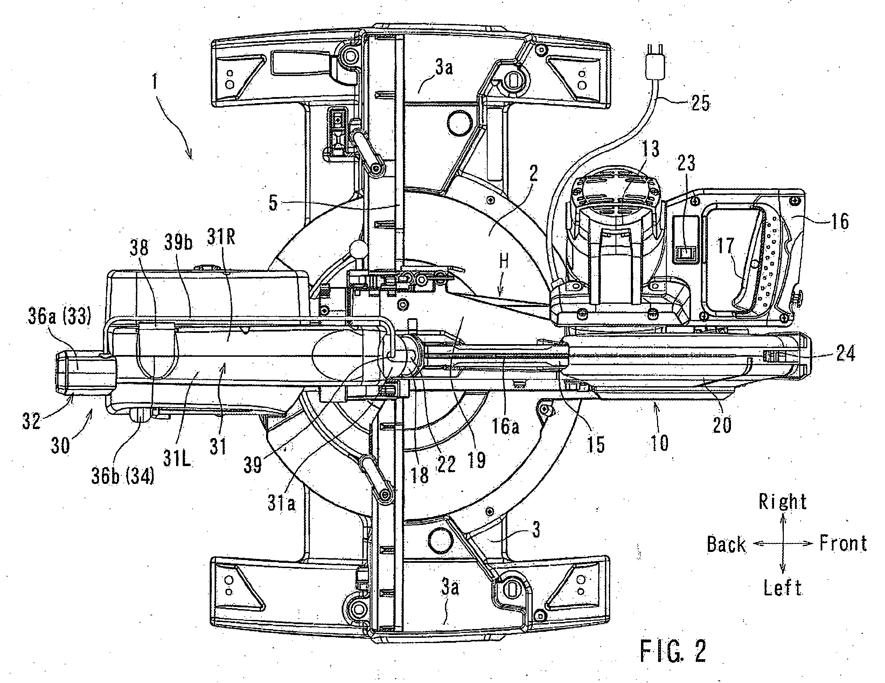

In the following description, a front side (a right side in FIG. 1) and a back side (a left side in FIG. 1) of the cutting tool 1 and the construction elements thereof respectively correspond to a front side and a back side of the user. Further, cutting action of the cutting tool 1 can progress from the front side to the back side of the cutting tool 1. Also, a right side (a upper. side in FIG. 2) and a left side (a lower side in FIG. 2) of the cutting tool 1 respectively correspond to a right side and a left side of the user.

As shown in FIG. 1, the table 2 is horizontally rotatably supported on the base 3. The table 2 has a lock knob 2a and a lock lever 2b, so that a rotating position of the table 2 can be changed by loosening the lock knob 2a or releasing the lock lever 2b. Thus, because the rotating position of the table 2 can be changed, the workpiece W can be cut at various angles in plan. Further, the table 2 has a positioning fence 5 that is positioned on an upper surface thereof, so the workpiece W can be appropriately positioned on the table upper surface. As best shown in FIG. 2, the positioning fence 5 is laterally extended beyond a circumferential periphery of the table 2, so as to be straddled between right and left auxiliary tables 3a and 3a of the base 3 that are laterally extended relative to the table 2. Further, the positioning fence 5 is attached to the table 2 such that a small clearance can be formed between the positioning fence 5 and the upper surface of the table 2.

As shown in FIG. 1, the main body supporting portion 4 disposed on the rear portion of the table 2 includes an upper and lower pair of longitudinal (back and forth) sliding mechanisms 6 and 8 and a laterally tilting mechanism 7. The longitudinal sliding mechanisms 6 and 8 are positioned to be vertically spaced each other. The lower longitudinal sliding mechanism 6 is essentially constructed of a right and left pair of slide bars 6a and 6a. The slide bars 6a and 6a are attached to the rear portion of the table 2 so as to be slidable longitudinally (back and forth). The laterally tilting mechanism 7 is attached to back end portions of the slide bars 6a and 6a. In particular, the laterally tilting mechanism 7 includes a tilting motion receiving member 7a and a tilting motion supporting member 7b. The tilting motion receiving member 7a is connected to the back end portions of the slide bars 6a and 6a. The tilting motion supporting member 7b is connected to the tilting motion receiving member 7a via a longitudinally extending rotational axis (not shown). Further, the laterally tilting mechanism 7 includes a fixing lever 7c, so that a tilting position (angle) of the tilting motion supporting member 7b relative to the tilting motion receiving member 7a can be adjusted by loosening the fixing lever 7c. In addition, the laterally tilting mechanism 7 includes a positioning mechanism (not shown). The positioning mechanism is capable of quickly and accurately adjusting and fixing the tilting angle of the tilting motion supporting member 7b to predetermined angles, e.g., an angle of a zero degree, and angles of 45 degrees toward the right and left. In other words, the positioning mechanism is capable of quickly and accurately determining cutting positions, e.g., an orthogonal cutting position and oblique cutting positions at angles of 45 degrees toward the right and left. Further, the positioning mechanism is capable of determining various cutting positions other than the cutting positions described above. Thus, when the laterally tilting mechanism 7 is operated to change the tilting angle of the tilting motion supporting member 7b, the cutting machine main body 10 can be tilted rightwardly and leftwardly. As a result, a circular rotary cutter blade 14 provided to the cutting machine main body 10 can be tilted rightwardly and leftwardly, so as to obliquely cut the workpiece W at various angles.

As shown in FIG. 1, a main body support arm 7d is connected to an upper portion of the tilting motion supporting member 7b while it is extended upwardly therefrom. The upper longitudinal sliding mechanism 8 is supported on an upper end portion of the main body support arm 7d. Similar to the lower longitudinal sliding mechanism 6, the upper longitudinal sliding mechanism 8 is essentially constructed of a right and left pair of slide bars 8a and 8a. A slide support portion 8b is connected to an upper portion of the main body support arm 7d. The slide bars 8a and 8a are positioned in parallel with each other and are supported on the slide support portion 8b so as to be slidable longitudinally (back and forth).

The longitudinal sliding mechanisms 6 and 8 are positioned in parallel with each other and are respectively capable of independently sliding longitudinally. Back end portions of the slide bars 8a and 8a of the upper longitudinal sliding mechanism 8 are connected to each other via a back end connecting block 8c. Conversely, front end portions of the slide bars 8a and 8a are connected to each other via a main body support bracket 11. The cutting machine main body 10 is supported on the main body support bracket 11 via a main body support shaft 12, so as to be tilted vertically. The cutting machine main body 10 is biased upwardly via a spring (not shown). Further, FIG. 1 shows a condition in which the cutting machine main body 10 is pressed down to a lower cutting position against a spring force of the spring.

As shown in FIG. 1, when the cutting machine main body 10 is tilted downwardly, the rotary cutter blade 14 can be cut into the workpiece W. Thus, the workpiece W can be cut. Further, the cutting machine main body 10 can be slid backwardly along a horizontal surface of the workpiece W by the longitudinal sliding mechanisms 6 and 8 while the cutting machine main body 10 is tilted downwardly. Therefore, the large size workpiece W can be cut.

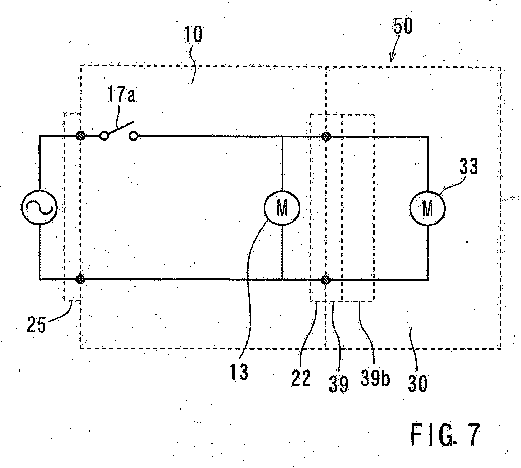

The cutting machine main body 10 has a main body case (stationary cover) H that is integrally formed. The main body case H includes a support portion 19 that is positioned on a back portion thereof, a dust-collecting nozzle (dust-collecting port) 18 that is disposed on the support portion 19, and a semicircular blade case 15 that is positioned on a front portion thereof. A back end portion of the support portion 19 is rotatably supported on the main body support bracket 11 via the main body support shaft 12, so that the whole main body case H can be supported on the main body support bracket 11, so as to be tilted vertically. Further, the circular rotary cutter blade 14 is rotatably supported on the semicircular blade case 15 positioned on the front portion of the main body case H while a substantially upper half of a circumference of the rotary cutter blade 14 is covered by the blade case 15. The cutting machine main body 10 has an electric motor 13 as a power source of the rotary cutter blade 14. The electric motor 13 is attached to a right side portion of the main body case H. The rotary cutter blade 14 can be rotated by the electric motor 13. Further, as shown in FIG. 2, the electric motor 13 can be actuated by the AC power source that is fed to a power source circuit (FIG. 7) via a power-supply cord 25 extended from a base portion of the electric motor 13.

The rotary cutter blade 14 can be rotated clockwise in FIG. 1. Therefore, in a cutting site C in which an cutting edge of the rotary cutter blade 14 can be cut into the workpiece W, as shown by an outline arrow in FIG. 1, the cutting edge of the rotary cutter blade 14 can be moved upwardly. As a result, the cutting chips produced by the cutting operation of the cutting tool 1 can be blown up from the cutting site C.

As best shown in FIG. 1, the cutting machine main body 10 has a movable cover 20 that is positioned on the front portion of the main body case H. The movable cover 20 is vertically rotatably attached to the blade case 15. The movable cover 20 is capable of being rotated with vertical motion of the cutting machine main body 10. In a condition in which the cutting machine main body 10 is positioned in an upper standby (retracted) position, a substantially lower half of the circumference of the rotary cutter blade 14 that is projected from the blade case 15 can be covered by the movable cover 20. When the cutting machine main body 10 is moved downwardly, the movable cover 20 is rotated counterclockwise in FIG. 1, so as to be gradually opened. Further, FIG. 1 shows a condition in which the cutting machine main body 10 is moved to a lowermost position thereof, so that the movable cover 20 is fully opened.

As best shown in FIG. 2, the cutting machine main body 10 has an operation handle 16 that is capable of being grasped by the user. The operation handle 16 is integrally attached to the right side portion of the main body case H. The operation handle 16 has an annular (loop) shape and has a switch lever 17. The switch lever 17 is operably attached to an inner circumference of the operation handle 16. Therefore, the user can operate the switch lever 17 by fingers while grasping the operation handle 16 by hand. When the switch lever 17 is pulled or pressed by the user, a main switch 17a (FIG. 7) embedded in the operation dandle 16 can be turned on, so that the electric motor 13 can be actuated. As a result, the rotary cutter blade 14 can be rotated by the electric motor 13. Further, the user can move the cutting machine main body 10 upwardly and downwardly by grasping the operation handle 16 by hand.

As best shown in FIG. 1, the cutting machine main body 10 has a carrier handle 16a that is positioned behind the operation handle 16. The carrier handle 16a is integrally attached to the main body case H while it is straddled between the blade case 15 and the dust-collecting nozzle 18. As shown in FIG. 1, the carrier handle 16a can be substantially horizontally positioned when the cutting machine main body 10 is moved to the lowermost position thereof. Therefore, the user can grasp the carrier handle 16a to carry the cutting tool 1 while the cutting machine main body 10 is moved to and anchored in the lowermost position thereof so as to be reduced in height. Naturally, the cutting tool 1, when not in use, can be stored while the cutting machine main body 10 is moved to and anchored in the lowermost position thereof so as to be reduced in height.

As best shown in FIG. 2, the operation handle 16 has a laser switch 23 that is used to position the workpiece W on the table 2. The laser switch 23 is attached to a back side portion of the operation handle 16. When the laser switch 23 is turned on, a laser oscillator 24 attached to a front portion of the blade case 15 can be actuated, so that a laser beam can be radiated toward the workpiece W disposed on the table 2. The radiated laser beam can be aligned with a scribe line or marking-off line scribed on the workpiece W, so that the workpiece W can be quickly and accurately positioned on the table 2.

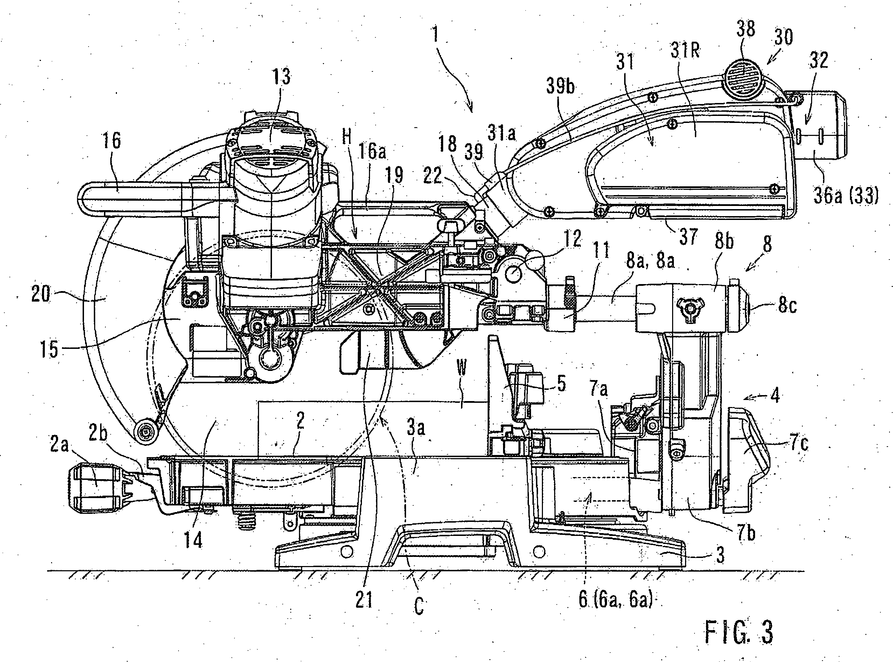

As shown in FIGS. 1 and 3, the cutting machine main body 10 has a dust-collecting guide 21 that is positioned on a lower portion of the support portion 19 of the main body case H. The dust-collecting guide 21 is positioned above the cutting site C. Further, when the cutting machine main body 10 is moved downwardly, the dust-collecting guide 21 is projected downwardly from the support portion 19, so as to be positioned directly above the cutting site C. The cutting chips blown up from the cutting site C can be effectively collected due to the dust-collecting guide 21 thus positioned, so as to be prevented from being scattered therearound.

The cutting chips collected by the dust-collecting guide 21 can be transferred upwardly by an air stream generated by rotation of the rotary cutter blade 14, and then be blown into the dust-collecting nozzle 18 of the main body case H through the support portion 19 of the main body case H. The dust-collecting device 30 of this embodiment is coupled to the dust-collecting nozzle 18.

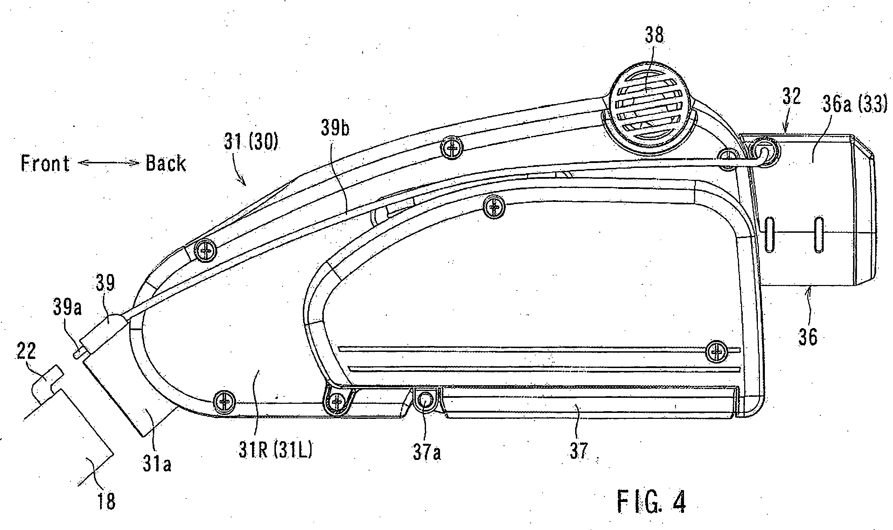

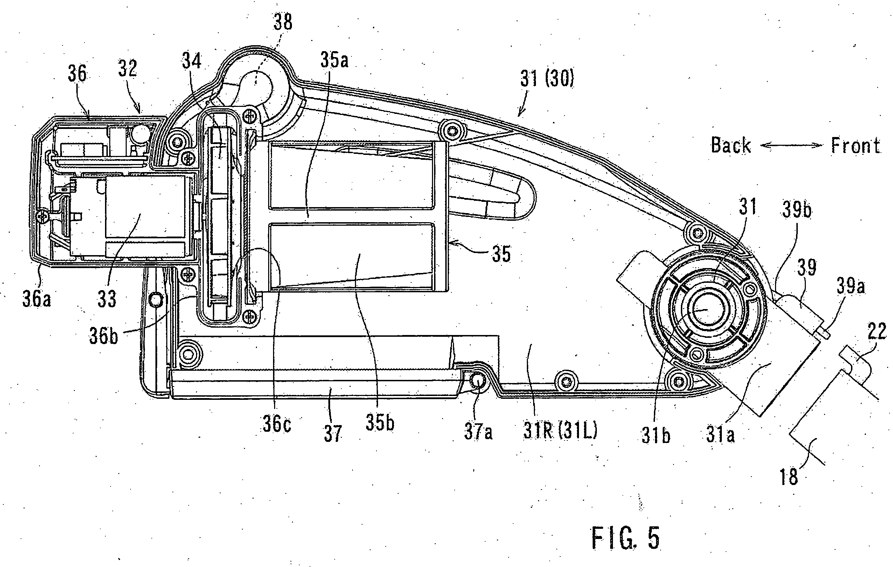

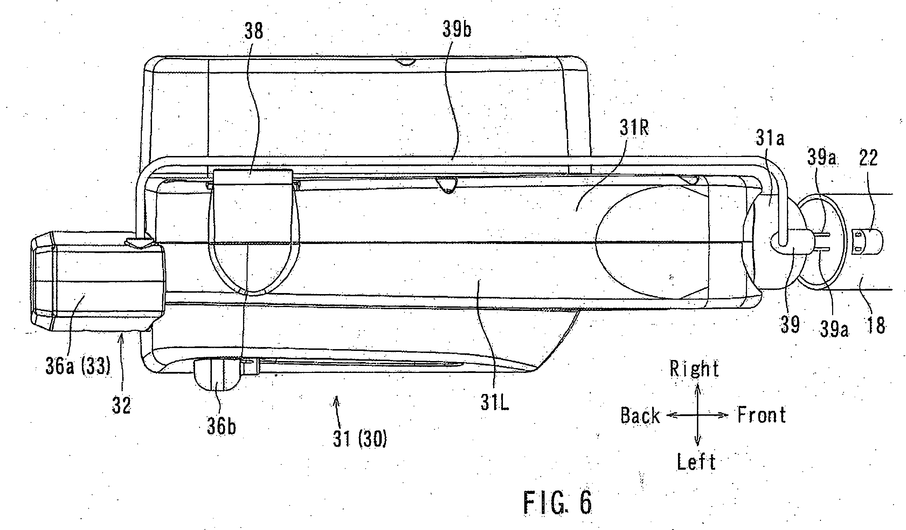

Next, a structure of the dust-collecting device 30 will be described in detail. As shown in FIGS. 4 to 6, the dust-collecting device 30 includes a dust-collecting container 31. In this embodiment, the dust-collecting container 31 may preferably be formed as a plastic dust box. However, the dust-collecting container 31 can be formed as a fabric dust bag. The dust-collecting container 31 has a connecting port 31a that is positioned on a front portion thereof. As shown in FIGS. 1 to 3, the dust-collecting nozzle 18 of the main body case H is inserted into the connecting port 31 a, so that the dust-collecting container 31 can be connected to a back portion of the cutting machine main body 10 (the main body case H). As shown in FIG. 6, the dust-collecting container 31 has a halved structure. That is, the dust-collecting container 31 is composed of a right half portion 31 R and a left half portion 31 L that are fitted with each other. As shown in FIG. 5, a rotatable support portion 31 b is disposed between the right and left half portions 31 R and 31 L in the front portion of the dust-collecting container 31. The connecting port 31a is connected to the rotatable support portion 31b, so as to be tilted up and down about the rotatable support portion 31b. The cutting chips blown into the dust-collecting nozzle 18 of the main body case H can be introduced into the dust-collecting container 31 (i.e., an interior space formed between the right and left half portions 31 R and 31L) via the connecting port 31a.

Further, as shown in FIGS. 4 to 6, the dust-collecting device 30 has a self dust-collecting mechanism (function) 32 that is attached to a back portion of the dust-collecting container 31. The self dust-collecting mechanism 32 is composed of an electric dust-collecting motor 33, a dust-collecting fan 34 and a cylindrical dust-collecting filter 35. Further, the dust-collecting device 30 includes a dust-absorbing case 36 that is attached to the back portion of the dust-collecting container 31. The dust-absorbing case 36 includes a motor receiving portion 36a and a fan receiving portion 36b that are formed therein. The dust-collecting motor 33 and the dust-collecting fan 34 are respectively received in the motor receiving portion 36a and the fan receiving portion 36b of the dust-absorbing case 36. Thus, the dust-collecting motor 33 and the dust-collecting fan 34 are received in a space that is isolated from the dust-collecting container 31 via the dust-absorbing case 36. Therefore, the dust-collecting motor 33 and the dust-collecting fan 34 can be effectively prevented from breaking down, e.g., malfunctioning caused by the cutting chips. As best shown in FIGS. 4 and 5, a back portion of the dust-absorbing case 36, i.e., a back portion of the motor receiving portion 36a is projected beyond a back surface of the dust-collecting container 31. Also, as shown in FIG. 6, a left side portion of the fan receiving portion 36b is projected from a left side portion of the dust-collecting container 31 because the dust-collecting fan 34 is increased in diameter. Further, a hermetic seal may preferably be formed between a projected portion of each of the motor receiving portion 36a and the fan receiving portion 36b and the dust-collecting container 31.

As shown in FIG. 5, the fan receiving portion 36b has an opening 36c that is formed in a front portion thereof. The cylindrical dust-collecting filter 35 is attached to the opening 36c of the fan receiving portion 36b. Further, the dust-collecting filter 35 is composed of a cylindrical frame 35a, and a fine mesh filter body 35b that is circumferentially wound around the cylindrical frame 35a.

According to the self dust-collecting mechanism 32 thus constructed, when the dust-collecting motor 33 is actuated, the dust-collecting fan 34 is rotated. Upon rotation of the dust-collecting fan 34, a powerful air stream blown into the dust-collecting container 31 via the connecting port 31a can be forcibly generated. The powerful air stream generated by the self dust-collecting mechanism 32 can be added to or combined with the air stream generated by the rotation of the rotary cutter blade 14, so that an extremely powerful air stream can be produced. As a result, the cutting chips produced in the cutting site C can be further effectively collected into the dust-collecting container 31 through the dust-collecting guide 21 and the dust-collecting nozzle 18. The cutting chips collected into the dust-collecting container 31 can be deposited on a bottom portion thereof. Further, the dust-collecting container 31 has a bottom cover 37 that is openably and closably attached to the bottom portion thereof via a support shaft 37a. The cutting chips deposited on the bottom portion of the dust-collecting container 31 can be wasted by opening the bottom cover 37.

Further, because the air stream generated by the rotation of the dust-collecting fan 34 can flow passing through the dust-collecting filter 35, the cutting chips collected into the dust-collecting container 31 can be removed by the dust-collecting filter 35, so as to be avoided from entering the dust-absorbing case 36. Thus, the dust-collecting motor 33 and the dust-collecting fan 34 can be reliably prevented from producing malfunctions. As a result, the self dust-collecting mechanism 32 can have increased durability.

Further, as best shown in FIG. 5, the fan receiving portion 36b of the dust-absorbing case 36 is communicated with a vent port 38 that is formed in the dust-collecting container 31. Therefore, the air stream generated by the rotation of the dust-collecting fan 34 and introduced into the dust-absorbing case 36 can be released into the atmosphere via the vent port 38.

Next, a power source circuit 50 of the dust-collecting device 30 will be described. As shown in FIGS. 4 to 6, the dust-collecting container 31 of the dust-collecting device 30 has a power source connector portion 39 that is attached to the connecting port 31a. The power source connector portion 39 is electrically connected to the dust-collecting motor 33 via a wire 39b. The dust-collecting nozzle 18 positioned on the cutting machine main body 10 has a connector jack 22 that is positioned opposite to the power source connector portion 39. The connector jack 22 is electrically connected to the power source circuit 50 via a wire (not shown). When the dust-collecting nozzle 18 is inserted into the connecting port 31 a in order to attach the dust-collecting container 31 to the cutting machine main body 10, terminals 39a and 39a of the power source connector portion 39 can be inserted into the connector jack 22, so that the power source connector portion 39 can be electrically connected to the connector jack 22. The power source circuit 50 is schematically shown in FIG. 7. In the power source circuit 50, the power source connector portion 39 is connected to the connector jack 22, the dust-collecting motor 33 is electrically connected to the power source circuit of the cutting machine main body 10, so as to be capable of being supplied with electrical power. The power source circuit of the cutting machine main body 10 is supplied with the AC power source. Therefore, when the switch lever 17 is pulled or pressed, the power source circuit 50 can be turned on. As a result, the electric motor 13 can be actuated, so that the rotary cutter blade 14 can be rotated. Conversely, when the switch lever 17 is pulled or pressed, the dust-collecting device 30 can be simultaneously supplied with electrical power via the power source connector portion 39 and the connector jack 22 that are connected to each other. As a result, the dust-collecting motor 33 can be actuated, so that the dust-collecting fan 34 can be rotated.

When the switch lever 17 is released after the cutting operation of the cutting tool 1 is completed, the power source circuit 50 can be turned off. As a result, the electric motor 13 can be deactuated, so that the rotary cutter blade 14 can be stopped. At the same time, the dust-collecting motor 33 can be deactuated, so that the dust-collecting fan 34 can be stopped. Thus, the dust-collecting motor 33 of the dust-collecting device 30 and the electric motor 13 of the cutting machine main body 10 are incorporated into the power source circuit 50 in parallel. Therefore, the dust-collecting device 30 can be actuated and deactuated in synchrony (conjunction) with the cutting machine main body 10. Thus, the dust-collecting device 30 can be reliably actuated or operated without performing a specific on-off operation.

According to the dust-collecting device 30 of the first embodiment thus constructed, the cutting chips blown up from the cutting site C can be first collected by the dust-collecting guide 21. The cutting chips collected by the dust-collecting guide 21 can be transferred upwardly by the air stream generated by the rotation of the rotary cutter blade 14, and then be blown into the dust-collecting nozzle 18 of the main body case H. The cutting chips blown into the dust-collecting nozzle 18 can be deposited in the dust-collecting container 31 connected to the dust-collecting nozzle 18.

In addition, the dust-collecting device 30 of the present embodiment includes the self dust-collecting mechanism 32 that is attached to the dust-collecting container 31. According to the self dust-collecting mechanism 32, in an actuated condition of the cutting machine main body 10 in which the rotary cutter blade 14 can rotate, the dust-collecting fan 34 can be rotated by the dust-collecting motor 33 as a drive source, so as to produce the powerful air stream that flows from the connecting port 31a toward the vent port 38. The powerful air stream generated by the rotation of the dust-collecting fan 34 is added to the air stream generated by the rotation of the rotary cutter blade 14, so as to produce the extremely powerful air stream. As a result, the cutting chips produced in the cutting site C can be further forcibly collected into the dust-collecting container 31. Thugs, the dust-collecting device 30 can have extremely increased dust-collecting performance.

Various changes and modifications may be made to the first embodiment. For example, in the embodiments, the power source connector portion 39 is attached to the connecting port 31a, and the connector jack 22 is provided to the dust-collecting nozzle 18. Upon insertion of the dust-collecting nozzle 18 into the connecting port 31a, the power source connector portion 39 can be automatically connected the connector jack 22, so that the self dust-collecting mechanism 32 can be supplied with the electrical power. However, the power source connector portion 39 can be connected the connector jack 22 by an operation different from a connecting operation of the dust-collecting nozzle 18 and the connecting port 31a, so as to supply the electrical power to the self dust-collecting mechanism 32. According to this structure, the dust-collecting container 31 can be used while the self dust-collecting mechanism 32 is deactuated.

### Second Detailed Representative Embodiment

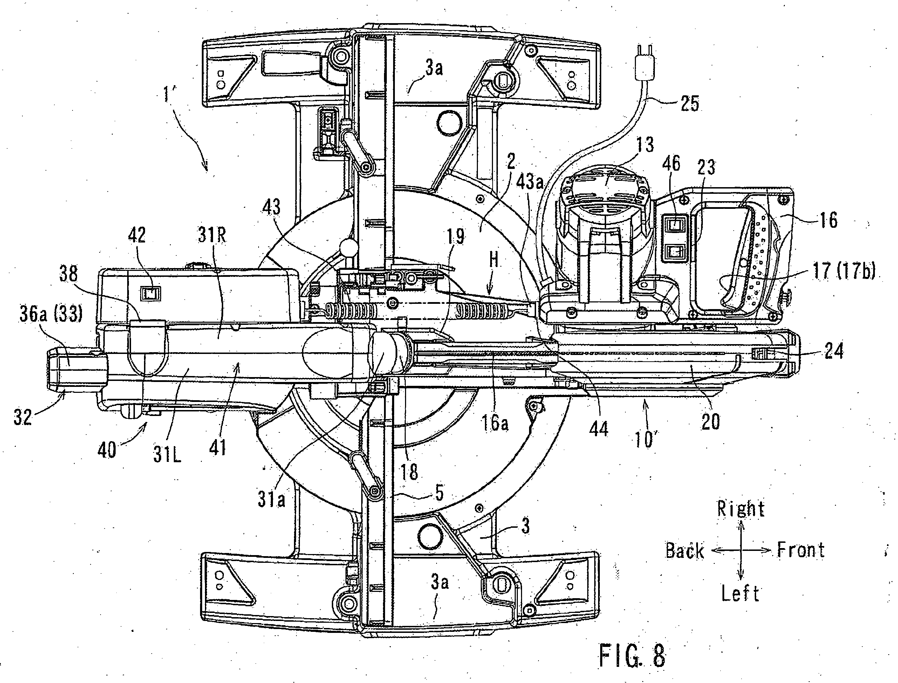

The second detailed representative embodiment will now be described in detail with reference to FIGS. 8 to 10.

Because the second embodiment relates to the first embodiment, only the constructions and elements that are different from the first embodiment will be explained in detail. Elements that are the same in the first and second embodiments will be identified by the same reference numerals and a detailed description of such elements may be omitted.

A cutting tool 1' of this embodiment has a dust-collecting device 40. As shown in FIG. 8, the dust-collecting device 40 includes a dust-collecting container 41 that corresponds to the dust-collecting container 31 of the first embodiment. However, the dust-collecting device 40 is constructed such that the dust-collecting container 41 can be used separately from a cutting machine main body 10'. Therefore, the dust-collecting device 40 of the second embodiment is different from the dust-collecting device 30 of the first embodiment in that a power supplying method to the dust-collecting motor 33 is modified and that the dust-collecting device 40 has expanded uses.

Similar to the dust-collecting container 31 of the first embodiment, the dust-collecting container 41 has the connecting port 31a that is positioned on a front portion thereof. The connecting port 31a is connected to the dust-collecting container 41, so as to be tilted up and down over a desired angle range. The dust-collecting container 41 can be connected to the cutting machine main body 10' by inserting the dust-collecting nozzle 18 into the connecting port 31a.

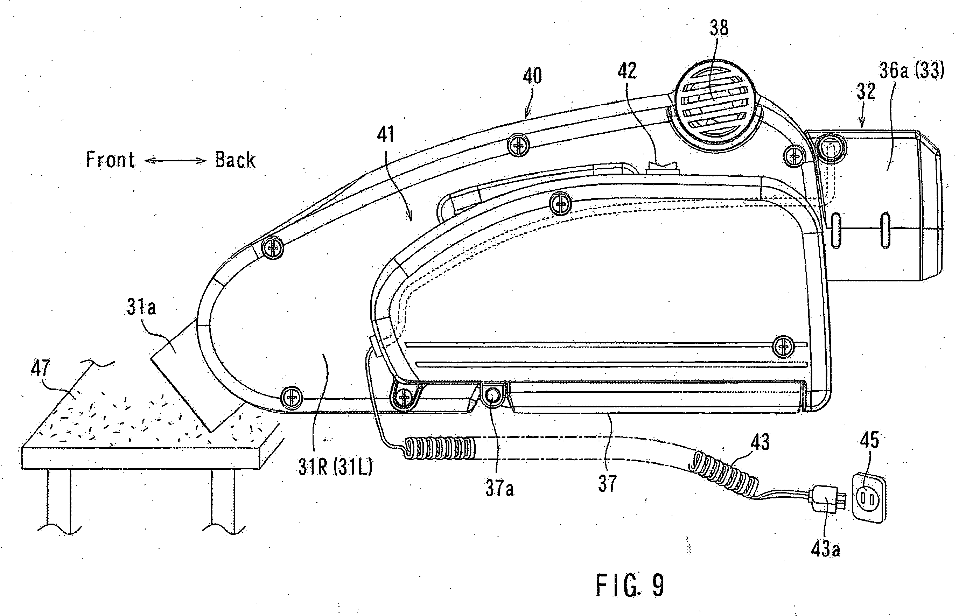

Unlike the dust-collecting container 31 of the first embodiment, the dust-collecting container 41 does not have a power source connector portion corresponding to the power source connector portion 39 that is attached to the connecting port 31a of the first embodiment. Similarly, the dust-collecting nozzle 18 does not have a connector jack corresponding to the connector jack 22 of the first embodiment. Instead, as best shown in FIG. 8, the dust-collecting container 41 has a dust-collecting switch 42 that is positioned on a right side thereof. The dust-collecting switch 42 is contained in a power source circuit 51, which will be hereinafter described. Further, an extendable curl cord 43 is extended from a front portion of the dust-collecting container 41. As shown in FIG. 9, an inner end of the curl cord 43 is connected to the dust-collecting motor 33. Further, the curl cord 43 has a three-prong plug 43a that is attached to an outer end thereof.

As shown in FIG. 8, in order to use the dust-collecting container 41 with the cutting machine main body 10', the plug 43a of the curl cord 43 is connected to a jack (socket) portion 44 that is provided to the cutting machine main body 10'. Thus, the dust-collecting motor 33 can be electrically connected to the power source circuit 51 that is provided to the cutting machine main body 10'. The power source circuit 51 further includes a synchronous/nonsynchronous side changeover switch 46 in addition to the dust-collecting switch 42. The changeover switch 46 is attached to the back side portion of the operation handle 16, so as to be positioned on the right side of the laser switch 23. Further, the power source circuit 51 further includes a double-pole single-throw main switch 17b that is embedded in the operation handle 16. The main switch 17b can be turned on and off when the switch lever 17 is operated.

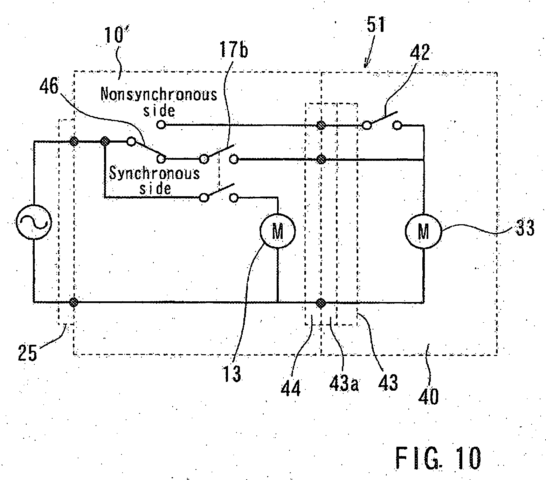

Similar to the first embodiment, the power-supply cord 25 is extended from the base portion of the electric motor 13. The AC power source is supplied to the power source circuit 51 via the power-supply cord 25. The power source circuit 51 is schematically shown in FIG. 10. When the curl cord 43 is connected to the jack portion 44 after the dust-collecting container 41 is attached to the dust-collecting nozzle 18, the dust-collecting motor 33 and the dust-collecting switch 42 of the dust-collecting device 40 can be electrically connected to the power source circuit 51. Further, the power source circuit 51 includes the synchronous/nonsynchronous side changeover switch 46, the main switch 17b and the electric motor 13. When the switch lever 17 is operated or pulled, the main switch 17b can be turned on. As a result, the electric motor 13 can be actuated, so that the rotary cutter blade 14 can be rotated.

Further, as shown in FIG. 10, when the switch lever 17 is operated while the changeover switch 46 is switched to a synchronous side, the electric motor 13 can be actuated, so that the rotary cutter blade 14 can be rotated (i.e., the cutting machine main body 10' can be actuated). Simultaneously, the dust-collecting motor 33 can be actuated regardless of whether the dust-collecting switch 42 is turned on or off, so that the dust-collecting device 40 can be operated. That is, the dust-collecting device 40 can be operated in synchrony(conjunction) with the cutting machine main body 10'.

To the contrary, when the switch lever 17 is operated while the changeover switch 46 is switched to a nonsynchronous side, the electric motor 13 can be actuated, so that the rotary cutter blade 14 can be rotated. However, the dust-collecting motor 33 cannot be actuated unless the dust-collecting switch 42 is turned on, so that the dust-collecting device 40 cannot be operated. That is, the dust-collecting device 40 cannot be operated in synchrony (conjunction) with the cutting machine main body 10' unless the dust-collecting switch 42 is turned on. In this case, when the dust-collecting switch 42 is turned on, the dust-collecting motor 33 can be actuated, so that the dust-collecting device 40 can be operated to collect the cutting chips into the dust-collecting container 41. Conversely, when the switch lever 17 is operated while the changeover switch 46 is switched to the nonsynchronous side, the dust-collecting motor 33 can be actuated if the dust-collecting switch 42 is already turned on, so that the dust-collecting device 40 can be operated. That is, in this case, the dust-collecting device 40 can be operated in synchrony with the cutting machine main body 10'. Naturally, even in the actuated condition of the cutting machine main body 10' in which the rotary cutter blade 14 can rotate, if the dust-collecting switch 42 is turned off, the dust-collecting motor 33 can be deactuated, so that the dust-collecting device 40 can be stopped.

As described above, according to the dust-collecting device 40 of the second example, the changeover switch 46 can change the dust-collecting device 40 between a synchronous condition in which the dust-collecting device 40 can be operated in synchrony with the cutting machine main body 10' and a nonsynchronous condition in which the dust-collecting device 40 cannot be operated in synchrony with the cutting machine main body 10' unless the dust-collecting switch 42 is turned on. In other words, the dust-collecting device 40 can be optionally changed between the synchronous condition and the nonsynchronous condition. Therefore, the user can optionally use the function of the dust-collecting device 40 as required. Thus, the dust-collecting device 40 can have increased usability.

Further, the dust-collecting device 40 of the second embodiment can be used independently of the cutting machine main body 10' while the dust-collecting container 41 is detached from the cutting machine main body 10'. In order to detach the dust-collecting container 41 from the cutting machine main body 10', the connecting port 31a is removed from the dust-collecting nozzle 18. Thereafter, the plug 43a of the curl cord 43 is removed from the jack portion 44 provided to the cutting machine main body 10'. Thus, the dust-collecting container 41 can be completely separated from the cutting tool 1' (the cutting machine main body 10'). As shown in FIG. 9, the dust-collecting container 41 separated from the cutting tool 1' can be separately used as a hand vacuum cleaner in a location away from the cutting tool 1'.

In this case, the plug 43a of the curl cord 43 is connected to an electrical outlet 45 via a two-prong socket adapter (not shown), so that the electrical power can be supplied to the dust-collecting motor 33. In this condition, when the dust-collecting switch 42 is turned on, the dust-collecting motor 33 can be actuated. Upon actuation of the dust-collecting motor 33, the dust-collecting fan 34 can be rotated, so as to produce the air stream that flows from the connecting port 31a toward the vent port 38. As a result, a suction force can be generated in the connecting port 31a. Therefore, the user can use the dust-collecting container 41 in hand in a desired location (e.g., a workbench 47 shown in FIG. 9) so as to vacuum off powder dust thereon through the connecting port 31a. Thus, the dust-collecting container 41 can be used as the hand vacuum cleaner.

Naturally, when the dust-collecting switch 42 is turned off, the dust-collecting motor 33 can be deactuated or stopped, so that the dust-collecting container 41 (the dust-collecting device 40) can be stored separately from the cutting tool 1'.

The dust-collecting device 40 of the second embodiment thus constructed, when attached to the cutting tool 1' (the cutting machine main body 10'), can function as a dust-collector that is capable of forcibly collecting the cutting chips blown up from the cutting site C. Further, the dust-collecting device 40 can be changed between the synchronous condition and the nonsynchronous condition by the changeover switch 46. Therefore, the user can optionally use the function of the dust-collecting device 40 as required. Thus, the dust-collecting device 40 can have increased usability.

Further, the dust-collecting device 40 of the second embodiment can be detached from the cutting tool 1', so as to be separately used as the hand vacuum cleaner. Therefore, the dust-collecting device 40 can be used, for example, to clean a work area. Thus, the dust-collecting device 40 can be used for various purposes.

### Third Detailed Representative Embodiment

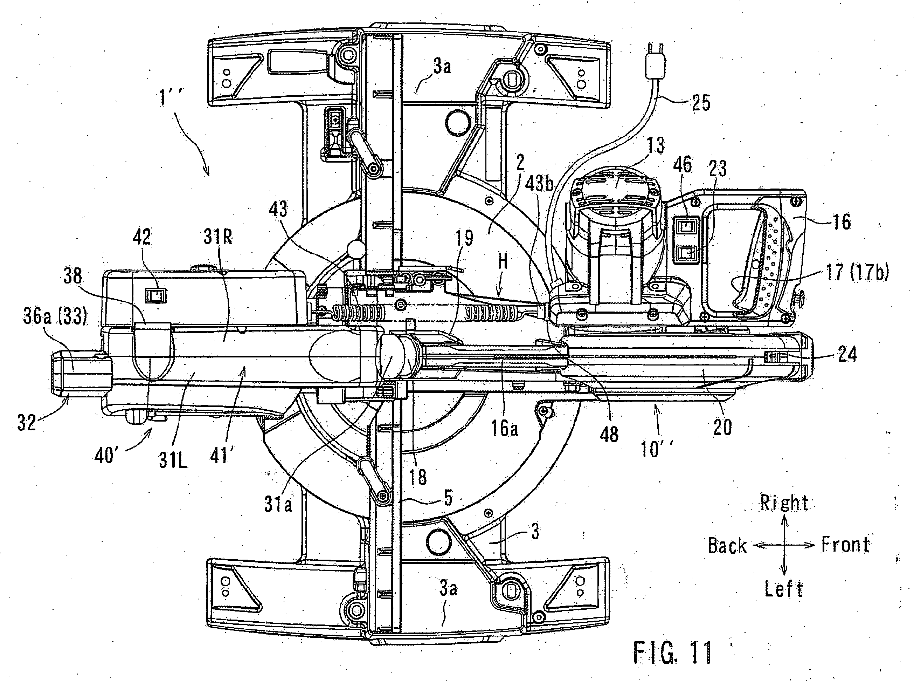

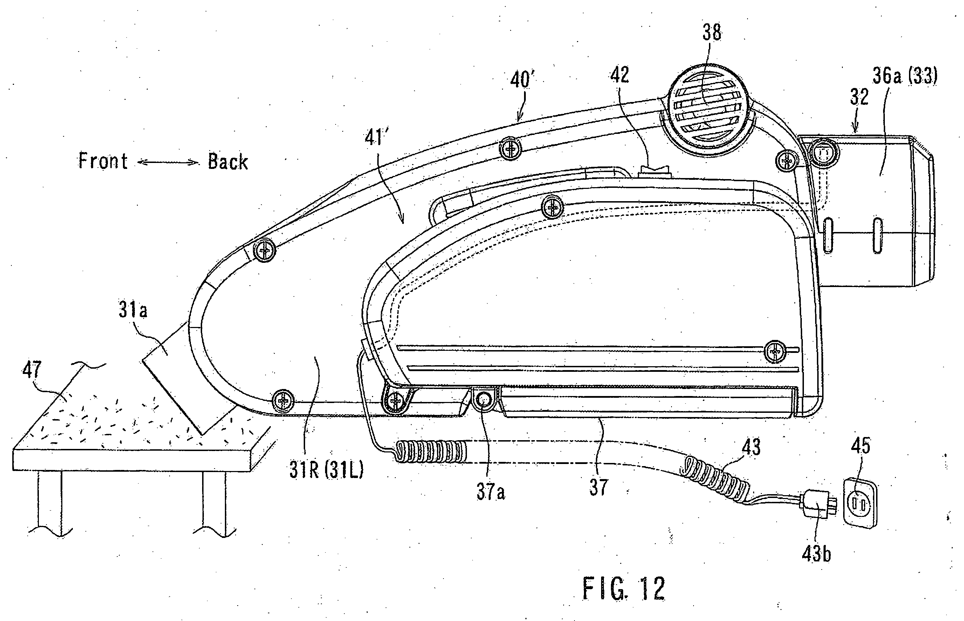

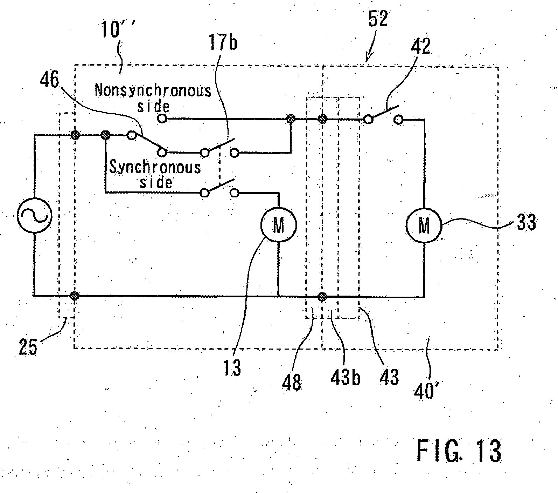

The third detailed representative embodiment will now be described in detail with reference to FIGS. 11 to 13.

Because the third embodiment relates to the second embodiment, only the constructions and elements that are different from the second embodiment will be explained in detail. Elements that are the same in the second and third embodiments will be identified by the same reference numerals and a detailed description of such elements may be omitted.

In a cutting tool 1" of this embodiment, unlike the second embodiment, the curl cord 43 has a two-prong plug 43b that is attached to the outer end thereof. Therefore, in order to use a dust-collecting device 40' (a dust-collecting container 41') with a cutting machine main body 10", the plug 43b of the curl cord 43 is connected to a jack (socket) portion 48 that is provided to the cutting machine main body 10". Naturally, the jack portion 48 is constructed to correspond to a two-prong type of plug.

Further, in the third embodiment, the power source circuit 51 of the second embodiment is replaced with a power source circuit 52. In the power source circuit 52, the synchronous side and the nonsynchronous side of the changeover switch 46 are respectively electrically connected to each other in the cutting machine main body 10", i.e., in an upstream side of the dust-collecting switch 42. Therefore, even when the changeover switch 46 is switched to any of the synchronous side and the nonsynchronous side, the dust-collecting switch 42 is turned on in order to actuate the dust-collecting device 40'. To the contrary, in the second embodiment, only when the changeover switch 46 is switched to the nonsynchronous side, the dust-collecting switch 42 is turned on in order to separately actuate the dust-collecting device 40'. That is, when the changeover switch 46 is switched to the synchronous side, the dust-collecting device 40' can be operated in synchrony with the cutting machine main body 10" regardless of whether the dust-collecting switch 42 is turned on.

According to this embodiment, in order to separately use the dust-collecting device 40' as the hand vacuum cleaner while the dust-collecting device 40' is separated from the cutting machine main body 10", the plug 43b of the curl cord 43 can be directly connected to the electrical outlet 45 without using a socket adapter. Therefore, the dust-collecting device 40' can have further increased usability.

Various changes and modifications may be made to the three embodiments described above. For example, in the embodiments, the bench cutting tool 1, 1' and 1" having the pair of longitudinal sliding mechanisms 6 and 8 is exemplified. However, the dust-collecting device 30, 40 and 40' can applied to a bench cutting tool having a single sliding mechanism or no sliding mechanism.

Further, if the exemplified self dust-collecting mechanism 32 has sufficient dust-collecting performance, the dust-collecting guide 21 can be omitted.

## Claims

1. A bench cutting tool (1; 1'; 1") having a rotary cutter blade (14) and a dust-collecting device (30; 40; 40'), comprising
a dust-collecting container (31; 41; 41') adapted to be connected to a dust-collecting port (18) of a stationary cover (H) covering an upper portion of the rotary cutter blade (14),
wherein the dust-collecting container (31; 41; 41') includes a self dust-collecting mechanism (32) that is capable of forcibly collecting cutting chips into the dust-collecting container, the self dust-collecting mechanism (32) comprises a dust-collecting fan (34),
wherein
the self dust-collecting mechanism (32) further comprises a dust-collecting motor (33), wherein the dust-collecting fan (34) is rotated by the dust-collecting motor (33), the dust-collecting container (31; 41; 41') includes a connecting port (31 a) positioned in a front portion thereof and the collecting port (18) formed in the stationary cover (H) is inserted into the connecting port (31a) when the dust-collecting container (31; 41; 41') is connected to the dust-collecting port (18), **characterized in that**
the dust-collecting container (31; 41; 41') comprises a rotatable support portion (31b) and the connecting port (31a) is connected to the rotatable support portion (31b) so as to be tilted up and down about the rotatable support portion (31b).

2. The bench cutting tool (1; 1'; 1") as defined in claim 1, wherein the self dust-collecting mechanism (32) is adapted to be actuated in synchrony with an operation of the bench cutting tool (1; 1'; 1").

3. The bench cutting tool (1; 1'; 1") as defined in claim 1 or 2, wherein the self dust-collecting mechanism (32) is capable of being switched between a condition in which the self dust-collecting mechanism (32) is actuated in synchrony with an operation of the bench cutting tool (1'; 1") and a condition in which the self dust-collecting mechanism (32) is not actuated in synchrony with an operation of the bench cutting tool (1'; 1").

4. The bench cutting tool (1; 1'; 1 ") as defined in any of the claims 1 to 3, wherein the dust-collecting container (41; 41') is adapted to be detached from the dust-collecting port (18).

5. The bench cutting tool (1; 1'; 1") as defined in claim 1 or 2, wherein when the dust-collecting container (31) is connected to the dust-collecting port (18), electrical power can be fed from the bench cutting tool (1) to the self dust-collecting mechanism (32), and wherein when the dust-collecting container (32) is detached from the dust-collecting port (18), the electrical power fed from the bench cutting tool (1) to the self dust-collecting mechanism (32) is interrupted.

## Patentansprüche

1. Werktischschneidewerkzeug (1; 1'; 1"), das ein Drehschneideblatt (14) und eine Staubsammelvorrichtung (30; 40; 40') aufweist, mit
einem Staubsammelbehälter (31; 41; 41'), der dazu angepasst ist, an eine Staubsammelöffnung (18) einer stationären Abdeckung (H), die einen oberen Teil des Drehschneideblatts (14) abdeckt, verbunden zu werden,
bei dem der Staubsammelbehälter (31; 41; 41') einen Selbststaubsammelmechanismus (32) enthält, der zwangsweise Schneidespäne in dem Staubsammelbehälter sammeln kann, bei dem der Selbststaubsammelmechanismus (32) ein Staubsammellüfterrad (34) aufweist,
bei dem
der Selbststaubsammelmechanismus (32) weiter einen Staubsammelmotor (33) aufweist, bei dem das Staubsammellüfterrad (34) durch den Staubsammelmotor (33) gedreht wird, der Staubsammelbehälter (31; 41; 41') eine Verbindungsöffnung (31a) enthält, die an einem vorderen Teil davon positioniert ist, und die Staubsammelöffnung (18), die in der stationären Abdeckung (H) ausgebildet ist, in die Verbindungsöffnung (31) eingeführt ist, wenn der Staubsammelbehälter (31; 41; 41') mit der Staubsammelöffnung (18) verbunden ist, **dadurch gekennzeichnet, dass**
der Staubsammelbehälter (31; 41; 41') einen drehbaren Lagerungsteil (31 b) aufweist und die Verbindungsöffnung (31 a) mit dem drehbaren Lagerungsteil (31 b) verbunden ist, so dass sie nach oben und nach unten um den drehbaren Lagerungsteil (31b) geneigt werden kann.

2. Werktischschneidewerkzeug (1; 1'; 1") nach Anspruch 1, bei dem der Selbststaubsammelmechanismus (32) dazu angepasst ist, synchron mit einem Arbeitsvorgang des Tischschneidewerkzeugs (1; 1'; 1") betrieben zu werden.

3. Werktischschneidewerkzeug (1; 1'; 1") nach Anspruch 1 oder 2, bei dem der Selbststaubsammelmechanismus (32) zwischen einem Zustand, in welchem der Selbststaubsammelmechanismus (32) synchron mit einem Arbeitsvorgang des Tischschneidewerkzeugs (1'; 1") betrieben wird, und einem Zustand, in welchem der Selbststaubsammelmechanismus (32) nicht synchron mit einem Arbeitsvorgang des Tischschneidewerkzeugs (1'; 1") betrieben wird, geschaltet werden kann.

4. Werktischschneidewerkzeug (1; 1'; 1") nach einem der Ansprüche 1 bis 3, bei dem der Staubsammelbehälter (41; 41') dazu angepasst ist, von der Staubsammelöffnung (18) entfernt zu werden.

5. Werktischschneidewerkzeug (1; 1'; 1") nach Anspruch 1 oder 2, bei dem, wenn der Staubsammelbehälter (31) mit der Staubsammelöffnung (18) verbunden ist, elektrische Leistung von dem Tischschneidewerkzeug (1) an den Selbststaubsammelmechanismus (32) zugeführt werden kann und bei dem, wenn der Staubsammelbehälter (32) von der Staubsammelöffnung (18) entfernt ist, die elektrische Leistung, die von dem Tischschneidewerkzeug (1) an den Selbststaubsammelmechanismus (32) zugeführt wird, unterbrochen wird.

## Revendications

1. Outil de coupe d'établi (1 ; 1' ; 1") présentant une lame de coupe rotative (14) et un dispositif de collecte de poussière (30 ; 40 ; 40'), comprenant :
un contenant de collecte de poussière (31 ; 41 ; 41') adapté pour être relié à un orifice de collecte de poussière (18) d'un couvercle stationnaire (H) recouvrant une partie supérieure de la lame de coupe rotative (14),
dans lequel le contenant de collecte de poussière (31 ; 41 ; 41') comporte un mécanisme d'autocollecte de poussière (32) qui est capable de collecter à force des copeaux dans le contenant de collecte de poussière, le mécanisme d'autocollecte de poussière (32) comprend un ventilateur de collecte de poussière (34),
dans lequel
le mécanisme d'autocollecte de poussière (32) comprend en outre un moteur de collecte de poussière (33), dans lequel le ventilateur de collecte de poussière (34) est tourné par le moteur de collecte de poussière (33), le contenant de collecte de poussière (31 ; 41 ; 41') comporte un orifice de liaison (31 a) positionné dans une partie avant de celui-ci et l'orifice de collecte (18) formé dans le couvercle stationnaire (H) est inséré dans l'orifice de liaison (31a) lorsque le contenant de collecte de poussière (31 ; 41 ; 41') est relié à l'orifice de collecte de poussière (18), **caractérisé en ce que** le contenant de collecte de poussière (31 ; 41 ; 41') comprend une partie de support rotative (31 b) et l'orifice de liaison (31 a) est relié à la partie de support rotative (31 b) de sorte à être incliné vers le haut et le bas autour de la partie de support rotative (31 b).

2. Outil de coupe d'établi (1 ; 1' ; 1") selon la revendication 1, dans lequel le mécanisme d'autocollecte de poussière (32) est adapté pour être actionné de manière synchrone à une opération de l'outil de coupe d'établi (1 ; 1' ; 1").

3. Outil de coupe d'établi (1 ; 1' ; 1") selon la revendication 1 ou 2, dans lequel le mécanisme d'autocollecte de poussière (32) est capable d'être commuté entre une condition, dans laquelle le mécanisme d'autocollecte de poussière (32) est actionné de manière synchrone à une opération de l'outil de coupe d'établi (1' ; 1") et une condition, dans laquelle le mécanisme d'autocollecte de poussière (32) n'est pas actionné de manière synchrone à une opération de l'outil de coupe d'établi (1' ; 1 ").

4. Outil de coupe d'établi (1 ; 1' ; 1") selon l'une quelconque des revendications 1 à 3, dans lequel le contenant de collecte de poussière (41 ; 41') est adapté pour être détaché de l'orifice de collecte de poussière (18).

5. Outil de coupe d'établi (1 ; 1' ; 1") selon la revendication 1 ou 2, dans lequel lorsque le contenant de collecte de poussière (31) est relié à l'orifice de collecte de poussière (18), la puissance électrique peut être amenée de l'outil de coupe d'établi (1) au mécanisme d'autocollecte de poussière (32) et dans lequel lorsque le contenant de collecte de poussière (32) est détaché de l'orifice de collecte de poussière (18), la puissance électrique amenée de l'outil de coupe d'établi (1) au mécanisme d'autocollecte de poussière (32) est interrompue.
